# EUROPÄISCHE PATENTSCHRIFT

(11) **EP 3 177 481 B1**
(45) Veröffentlichungstag und Bekanntmachung des Hinweises auf die Patenterteilung: **24.10.2018**
(21) Anmeldenummer: 15745502.3
(22) Anmeldetag: 05.08.2015
(51) Int. Cl.: B60N 2/42, B60N 2/75

(54) **GESICHERTES AUSKLAPPBARES BAUTEIL BZW. GESICHERTE ARMLEHNE**
SECURED, FOLDABLE COMPONENT RESPECTIVELY SECURED ARMREST
COMPOSANT PROTÉGÉ ET DÉPLIABLE RESPECTIVEMENT ACCOUDOIR PROTÉGÉ

(30) Priorität: 05.08.2014 DE 102014215432
(43) Veröffentlichungstag der Anmeldung: 14.06.2017
(73) Patentinhaber: Adient Luxembourg Holding S.à r.l., 1855 Luxembourg (LU)
(72) Erfinder: GRÜDL, Peter, 52428 Jülich (DE); KIENKE, Ingo, 42929 Wermelskirchen (DE); ROHTSTEIN, Gerhard, 42553 Velbert (DE); LINNENBRINK, Jörg, 42327 Wuppertal (DE)
(74) Vertreter: Kutzenberger Wolff & Partner
(86) Internationale Anmeldenummer: PCT/EP2015/068110
(87) Internationale Veröffentlichungsnummer: WO 2016/020458

(56) Entgegenhaltungen:
- CN-U- 201 998 856
- DE-A1- 10 052 838

## Beschreibung

Die vorliegende Erfindung betrifft ein ausklappbares Bauteil, insbesondere eine Armlehne eines Fahrzeugsitzes gemäß dem Oberbegriff des Patentanspruchs 1.

Derartige ausklappbare Bauteile, wie z. B. Armlehnen, sind aus dem Stand der Technik, beispielsweise der DE 40 35 856 C2 oder der DE 34 14 316 C2 bekannt. Ein ausklappbares Bauteil mit den Merkmalen des Patentanspruchs 1 ist aus der DE 100 52 838 A1 bekannt. Die dort beschriebenen Sicherungsmechanismen sind jedoch vergleichsweise aufwändig gestaltet.

Es war deshalb die Aufgabe der vorliegenden Erfindung, ein ausklappbares Bauteil, wie z. B. eine Armlehne, zur Verfügung zu stellen, das die Nachteile des Standes der Technik nicht aufweist.

Gelöst wird die Aufgabe mit einem ausklappbaren Bauteil, insbesondere mit einer Armlehne eines Fahrzeugsitzes, mit den Merkmalen des Patentanspruchs 1.

Die vorliegende Erfindung betrifft das ausklappbare Bauteil. Beispielsweise handelt es sich bei einem solchen ausklappbaren Bauteil um die Armlehne eines Fahrzeugsitzes, die insbesondere im Fond, d. h. auf der Rückbank eines Kraftfahrzeuges zum Einsatz kommt. Diese Armlehne ist um eine Drehachse von einer Verstaustellung, in der sie im Wesentlichen parallel zu der Rückenlehne des Fahrzeugsitzes vorgesehen ist, in eine Gebrauchsstellung drehbar, in der sie im Wesentlichen in einem 90° Winkel zur Rückenlehne ausgerichtet ist und einem Sitzinsassen zur Abstützung eines Armes zur Verfügung steht. Um zu vermeiden, dass die Armlehne, insbesondere wenn sie sich in ihrer Verstaustellung befindet, bei einem Unfall unkontrolliert um ihre Drehachse dreht und/oder schwingt, weist die Armlehne erfindungsgemäß ein Verriegelungselement auf, das die Armlehne in ihrer Verstaustellung, sichert.

Erfindungsgemäß ist das Verriegelungselement nun so vorgesehen, dass es bei einem Unfall um eine Drehachse von einer Betätigungsposition, in der die Armlehne frei um eine Drehachse von der Verstau- in die Gebrauchsstellung und umgekehrt überführt werden kann, in eine Verriegelungsposition dreht, in der die Armlehne in der Verstauposition, arretiert ist. Insbesondere sind das ausklappbare Bauteil und das Verriegelungselement derart ausgebildet, dass ein Drehwinkel des Verriegelungselements einem Drehwinkel des ausklappbaren Bauteils bei einem Unfall mit einem Faktor 2 voreilt. Hierdurch wird auf vorteilhafte Weise ein Verriegelungsmechanismus für das ausklappbare Bauteil bereitgestellt, welcher robust gegen Timing-Veränderungen im System ist. Bevorzugt wird der Verriegelungsmechanismus bereits bei wenigen ms verriegelt und hält den verriegelten Zustand über eine lange Zeitspanne aufrecht. Bevorzugt wird der Verriegelungsmechanismus ab 25 ms und bis 180 ms kontinuierlich verriegelt. Hierdurch werden insbesondere Störgrößen wie Polsterpressung, Reibung, Lagefehler, Toleranzen, Gewichtsunterschiede in ihrem Einfluss reduziert. Somit wird beispielsweise die Konstruktion auf weitere Fahrzeugmechanismen übertragbar. Außerdem entfällt somit ein Redesign der sonst sensiblen und im Detail konstruierten Sperrgeometrien. Auf vorteilhafte Weise wird somit die Insassengefährdung reduziert. Des Weiteren wirkt sich das erfindungsgemäße ausklappbare Bauteil positiv in Bezug auf Buzz, Squeak and Rattle (BSR) Eigenschaften aus, da die federbelastete Sperrklinke konventioneller Systeme entfällt und mit ihr das Klapperpotential bei schwellender Anregung reduziert wird.

Insbesondere ist ein erfindungsgemäßes ausklappbares Bauteil mit dem Verriegelungselement auch in einem Schloss, in einem Recliner, in einer Schiene, in einem Hebel, in einer Schublade und in jeder Art von Verriegelungen mit Fliehkräften, insbesondere in Fliehkraftsperren, vorgesehen.

Vorzugsweise ist die Kurvenscheibe im Wesentlichen als Kreis ausgeführt.

Vorzugsweise fallen die Drehachse des ausklappbaren Bauteils bzw. der Armlehne und die Drehachse der Kurvenscheibe zusammen.

Die Kurvenscheibe kann einstückig oder mehrstückig mit der Armlehne ausgebildet sein. In jedem Fall ist die Kurvenscheibe jedoch drehfest mit der Armlehne vorgesehen.

Gemäß einer bevorzugten Ausführungsform der vorliegenden Erfindung weisen die Kurvenscheibe und/oder das ausklappbare Bauteil bzw. die Armlehne eine Verriegelungskontur, beispielsweise eine Ausnehmung an ihrem Umfang, auf. Mit diese Verriegelungskontur wird die Armelehne bei einem Unfall in ihrer Verstaustellung gesichert.

Weiterhin bevorzugt weisen die Kurvenscheibe und/oder das ausklappbare Bauteil bzw. die Armlehne einen Anschlag, insbesondere eine Anschlagskerbe, auf, die den Drehwinkel der Armlehne, insbesondere in ihrer Gebrauchsstellung, begrenzt.

Erfindungsgemäß ist das Verriegelungselement als Kurvenscheibe vorgesehen und weist besonders bevorzugt einen kreisförmigen Querschnitt auf.

Vorzugsweise ist an dem Umfang des Verriegelungselementes, insbesondere an dem kreisförmigen Querschnitt der Kurvenscheibe, eine Ausnehmung vorgesehen, die im Normalfall der Kurvenscheibe des ausklappbaren Bauteils bzw. der Armlehne zugewandt ist und dadurch eine Drehung des ausklappbaren Bauteils bzw. der Armlehne von der Gebrauchs- in die Verstauposition und umgekehrt erlaubt.

Im Folgenden wird die Erfindung anhand der Figuren 1 - 3 erläutert. Diese Erläuterungen sind lediglich beispielhaft und schränken den allgemeinen Erfindungsgedanken nicht ein.
**Figur 1** zeigt das erfindungsgemäße ausklappbare Bauteil in seiner Verstaustellung bzw. die erfindungsgemäße Armlehne in ihrer Verstaustellung.
**Figur 2** zeigt das erfindungsgemäße ausklappbare Bauteil in seiner Gebrauchsstellung bzw. die erfindungsgemäße Armlehne in ihrer Gebrauchsstellung.
**Figur 3** zeigt das verstaute, gesicherte ausklappbare Bauteil bzw. die verstaute, gesicherte Armlehne in einer Unfallsituation.
**Figur 4** zeigt eine weitere Ausführungsform des erfindungsgemäßen ausklappbaren Bauteils bzw. der erfindungsgemäßen Armlehne in einer Verriegelungsstellung.
**Figur 5** zeigt eine Detailansicht der weiteren Ausführungsform gemäß **Figur 4****.**

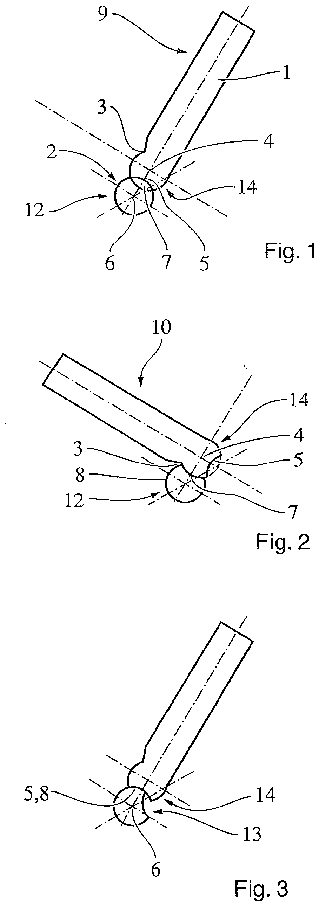

**Figur 1** zeigt das erfindungsgemäße ausklappbare Bauteil 1, wie z. B. die erfindungsgemäße Armlehne 1, das an einem Fahrzeugsitz vorgesehen ist. Insbesondere handelt es sich bei diesem Fahrzeugsitz um eine Sitzbank, die insbesondere im Fond eines Fahrzeugsitzes vorgesehen ist. Das erfindungsgemäße ausklappbare Bauteil 1, wie z. B. die erfindungsgemäße Armlehne 1, ist dann zwischen zwei Fahrzeugsitzen, insbesondere in die Rückenlehne der Sitzbank, integriert. Bei der Darstellung gemäß Figur 1 ist die Rückenlehne in ihrer Verstauposition vorgesehen, d. h. sie befindet sich im Wesentlichen parallel zu der Rückenlehne (nicht dargestellt) des Fahrzeugsitzes. Das erfindungsgemäße ausklappbare Bauteil 1 bzw. die erfindungsgemäße Armlehne 1 weist eine Drehachse 4 auf, um die er bzw. sie von der Verstaustellung 9 in seine bzw. ihre Gebrauchsstellung 10 (vgl. Figur 2) gedreht werden kann. Des Weiteren weist das ausklappbare Bauteil 1 bzw. die Armlehne 1 an seinem bzw. ihrem unteren Ende im Bereich seiner bzw. ihrer Drehachse 4 eine Kurvenscheibe 14 auf, die ein- oder mehrstückig mit dem ausklappbaren Bauteil 1 bzw. der Armlehne 1 vorgesehen sein kann, die jedoch drehfest mit dem ausklappbaren Bauteil 1 bzw. der Armlehne 1 vorgesehen ist. In dem vorliegenden Fall ist die Kurvenscheibe 14 das Segment, vorzugsweise das ¾ Segment, eines Kreises, die im Bereich ihres Umfangs eine Verriegelungskontur 5, hier eine Ausnehmung, aufweist. Vorzugsweise weist das ausklappbare Bauteil 1 bzw. die Armlehne 1 und/oder die Kurvenscheibe des Weiteren einen Anschlag 3, insbesondere eine Anschlagskerbe, auf, die, wie Figur 2 entnommen werden kann, die Lage des ausklappbaren Bauteils 1 bzw. der Armlehne 1 in seiner bzw. ihrer Gebrauchsposition, d. h. den Drehwinkel des ausklappbaren Bauteils bzw. der Armlehne, begrenzt. Weiterhin erfindungsgemäß weist das ausklappbare Bauteil 1 bzw. die Armlehne 1 ein Verriegelungselement 2 auf, das einen im Wesentlichen kreisförmigen Querschnitt aufweist und das bei einem Unfall von seiner in Figur 1 dargestellten Betätigungsposition 12 in eine Verriegelungsposition 13 (vgl. Figur 3) gedreht werden kann. Das Verriegelungselement weist eine Ausnehmung 7 auf. Durch die Ausnehmung 7 ist eine Drehung des ausklappbaren Bauteils 1 bzw. der Armlehne 1 von der Verstau- in die Gebrauchsposition möglich.

**Figur 2** zeigt das erfindungsgemäße ausklappbare Bauteil 1 bzw. die erfindungsgemäße Armlehne 1 in seiner bzw. ihrer Gebrauchsposition. Ein Vergleich zwischen den Figuren 1 und 2 zeigt, dass die Kurvenscheibe 14 des ausklappbaren Bauteils 1 bzw. der Armlehne 1 entlang einer kreisförmigen Ausnehmung 7 dreht, bis der Anschlag 3 des ausklappbaren Bauteils 1 bzw. der Armlehne 1 an die Kurvenscheibe 2 stößt. Das Verriegelungselement 2 ist folglich auch ein Begrenzungselement für die Drehung des ausklappbaren Bauteils 1 bzw. der Armlehne 1.

In **Figur 3** ist eine Unfallsituation dargestellt, bei der über den üblichen Betrieb eines Kraftfahrzeuges hinausgehende Verzögerungen stattfinden. Bedingt durch eine derartige Verzögerung wird das Verriegelungselement 2 um seine Drehachse, hier im Uhrzeigersinn, von der in den Figuren 1 und 2 dargestellten Betätigungsposition 12 in eine Verriegelungsposition 13 verbracht. Dadurch greift das Verriegelungselement 2 in eine an der Kurvenscheibe 14 oder dem ausklappbaren Bauteil 1 bzw. der Armlehne 1 vorgesehene Verriegelungskontur 5, hier eine Ausnehmung in der Kurvenscheibe 14, ein und verhindert dadurch, dass sich das ausklappbare Bauteil 1 bzw. die Armlehne 1 um seine bzw. ihre Drehachse 4 drehen kann. Die Drehung des Verriegelungselements 2 kann durch die Verzögerung und/oder einen Antrieb bewirkt werden.

Sobald die Unfallsituation vorbei ist, kann die Kurvenscheibe 14 wieder in ihre Betätigungsposition 12 verbracht werden, so dass eine normale Betätigung des ausklappbaren Bauteils 1 bzw. der Armlehne 1 möglich ist.

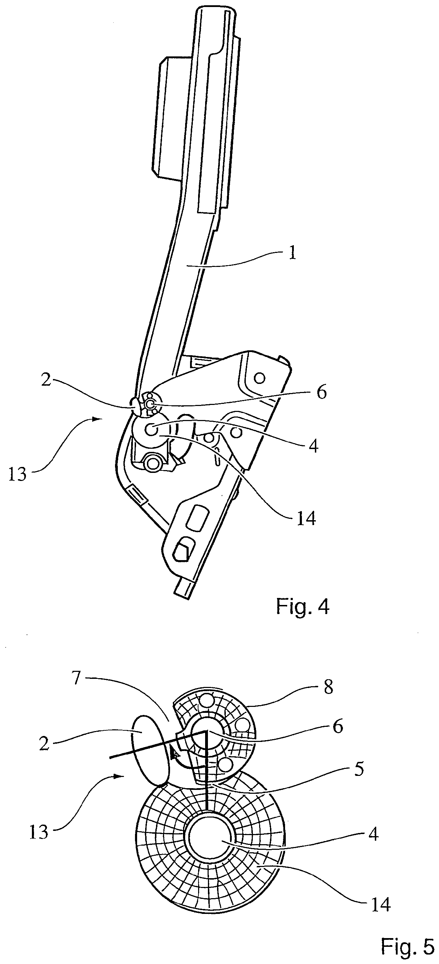

**Figur 4** und **Figur 5** zeigen eine weitere Ausführungsform des erfindungsgemäßen ausklappbaren Bauteils 1 bzw. der erfindungsgemäßen Armlehne 1 in einer Verriegelungsstellung. Hierbei befindet sich das Verriegelungselement 2 in der Verriegelungsposition 13 und greift in die an der Kurvenscheibe 14 vorgesehene Verriegelungskontur 5 ein (vgl. **Figur 3**), so dass eine Drehung des ausklappbaren Bauteils 1 bzw. der Armlehne 1 um seine bzw. ihre Drehachse 4 entgegen dem Uhrzeigersinn in **Figur 4** und **Figur** 5 verhindert wird.

### Bezugszeichenliste:

- 1: Ausklappbares Bauteil bzw. Armlehne
- 2: Verriegelungselement, Kurvenscheibe, Drehbegrenzer
- 3: Anschlag an dem ausklappbaren Bauteil bzw. der Armlehne, Anschlagskerbe
- 4: Drehachse des ausklappbaren Bauteils bzw. der Armlehne, Drehachse der Kurvenscheibe
- 5: Verriegelungskontur des ausklappbaren Bauteils bzw. der Armlehne, Kurvenscheibe
- 6: Drehachse des Verriegelungselements
- 7: Ausnehmung
- 8: Verriegelungskontur des Verriegelungselementes
- 9: Verstaustellung
- 10: Gebrauchsstellung
- 11: Anschlag an dem Verriegelungselement
- 12: Betätigungsposition
- 13: Verriegelungsposition
- 14: Kurvenscheibe

## Patentansprüche

1. Ausklappbares Bauteil (1), insbesondere Armlehne (1) eines Fahrzeugsitzes, das um eine Drehachse (4) von einer Verstaustellung (9) in eine Gebrauchsstellung (10) drehbar ist und der mit einem Verriegelungselement (2) bei einem Unfall in seiner Verstaustellung (9) sicherbar ist, wobei das Verriegelungselement (2) bei einem Unfall um eine Drehachse (6) von einer Betätigungsposition (12) in eine Verriegelungsposition (13) dreht, wobei an dem ausklappbaren Bauteil (1) bzw. der Armlehne (1) eine Kurvenscheibe (14) vorgesehen ist,
**dadurch gekennzeichnet, dass**
das Verriegelungselement (2) als Kurvenscheibe vorgesehen ist.

2. Ausklappbares Bauteil (1), insbesondere Armlehne (1), nach Anspruch 1, **dadurch gekennzeichnet, dass** die Drehachse (4) des ausklappbaren Bauteils (1) bzw. der Armlehne (1) mit der Drehachse (4) der Kurvenscheibe (14) zusammenfällt.

3. Ausklappbares Bauteil (1), insbesondere Armlehne (1), nach einem der voranstehenden Ansprüche, **dadurch gekennzeichnet, dass** die Kurvenscheibe (14) und/oder das ausklappbare Bauteil (1) bzw. die Armlehne (1) eine Verriegelungskontur (5), insbesondere eine Ausnehmung, an ihrem Umfang aufweist.

4. Ausklappbares Bauteil (1), insbesondere Armlehne (1), nach einem der voranstehenden Ansprüche, **dadurch gekennzeichnet, dass** die Kurvenscheibe (14) und/oder das ausklappbare Bauteil (1) bzw. die Armlehne (1) einen Anschlag (3), insbesondere eine Anschlagskerbe (3), aufweist.

5. Ausklappbares Bauteil (1), insbesondere Armlehne (1), nach einem der voranstehenden Ansprüche, **dadurch gekennzeichnet, dass** das Verriegelungselement (2) einen kreisförmigen Querschnitt aufweist.

6. Ausklappbares Bauteil (1), insbesondere Armlehne (1), nach Anspruch 5, **dadurch gekennzeichnet, dass** das Verriegelungselement (2) an seinem Umfang eine Ausnehmung (7) aufweist

## Claims

1. Fold-out component (1), in particular armrest (1) of a vehicle seat, which is rotatable about an axis of rotation (4) from a stowage position (9) into a use position (10) and which is securable in its stowage position (9) by a locking element (2) in the event of an accident, wherein, in the event of an accident, the locking element (2) rotates about an axis of rotation (6) from an actuating position (12) into a locking position (13), wherein a cam disk (14) is provided on the fold-out component (1) or the armrest (1),
**characterized in that**
the locking element (2) is provided in the form of a cam disk.

2. Fold-out component (1), in particular armrest (1), according to Claim 1, **characterized in that** the axis of rotation (4) of the fold-out component (1) or the armrest (1) coincides with the axis of rotation (4) of the cam disk (14).

3. Fold-out component (1), in particular armrest (1), according to either of the preceding claims, **characterized in that** the cam disk (14) and/or the fold-out component (1) or the armrest (1) has a locking contour (5), in particular a recess, on its circumference.

4. Fold-out component (1), in particular armrest (1), according to one of the preceding claims, **characterized in that** the cam disk (14) and/or the fold-out component (1) or the armrest (1) has a stop (3), in particular a stop notch (3).

5. Fold-out component (1), in particular armrest (1), according to one of the preceding claims, **characterized in that** the locking element (2) has a circular cross section.

6. Fold-out component (1), in particular armrest (1), according to Claim 5, **characterized in that** the locking element (2) has a recess (7) on its circumference.

## Revendications

1. Élément structural (1) déployable, notamment accoudoir (1) d'un siège de véhicule, lequel peut tourner autour d'un axe de rotation (4) depuis une position de rangement (9) dans une position d'utilisation (10) et qui peut être bloqué avec un élément de verrouillage (2) dans sa position de rangement (9) dans le cas d'un accident, l'élément de verrouillage (2), dans le cas d'un accident, tournant autour d'un axe de rotation (6) d'une position d'actionnement (12) dans une position de verrouillage (13), une came (14) étant présente sur l'élément structural (1) déployable ou l'accoudoir (1),
**caractérisé en ce que**
l'élément de verrouillage (2) se présente sous la forme d'une came.

2. Élément structural (1) déployable, notamment accoudoir (1), selon la revendication 1, **caractérisé en ce que** l'axe de rotation (4) de l'élément structural (1) déployable ou de l'accoudoir (1) coïncide avec l'axe de rotation de la came (14).

3. Élément structural (1) déployable, notamment accoudoir (1), selon l'une des revendications précédentes, **caractérisé en ce que** la came (14) et/ou l'élément structural (1) déployable ou l'accoudoir (1) possèdent sur son pourtour un profil de verrouillage (5), notamment un évidement.

4. Élément structural (1) déployable, notamment accoudoir (1), selon l'une des revendications précédentes, **caractérisé en ce que** la came (14) et/ou l'élément structural (1) déployable ou l'accoudoir (1) possèdent une butée (3), notamment une encoche de butée (3) .

5. Élément structural (1) déployable, notamment accoudoir (1), selon l'une des revendications précédentes, **caractérisé en ce que** l'élément de verrouillage (2) possède une section transversale circulaire.

6. Élément structural (1) déployable, notamment accoudoir (1), selon la revendication 5, **caractérisé en ce que** l'élément de verrouillage (2) possède un évidement (7) sur son pourtour.
